(19) Europäisches Patentamt
European Patent Office
Office européen des brevets

(11) EP 2 105 709 A2

(12) EUROPEAN PATENT APPLICATION

(43) Date of publication:
30.09.2009 Bulletin 2009/40

(51) Int Cl.:
*G01C 21/32* (2006.01)    *G06F 17/30* (2006.01)

(21) Application number: 09004262.3

(22) Date of filing: 25.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 28.03.2008 JP 2008088165

(71) Applicant: Aisin AW Co., Ltd.
Fujii-cho
Anjo-shi,
Aichi 444-1192 (JP)

(72) Inventors:
• Fukumoto, Masataka
Okazaki-shi, Aichi 444-8564 (JP)
• Sugiura, Hiroaki
Okazaki-shi, Aichi 444-8564 (JP)
• Toujyou, Takayuki
Okazaki-shi, Aichi 444-8564 (JP)

(74) Representative: Kramer - Barske - Schmidtchen
European Patent Attorneys
Landsberger Strasse 300
80687 München (DE)

(54) **Road shape estimating device, road shape estimating method and program**

(57)    A road shape estimating device has a data obtaining processing unit (31) that is adapted to obtain interpolation point data of shape interpolation points (mi), a radius calculation processing unit (31) that is adapted to calculate a radius (R) of curvature at each of shape interpolation points (mi) based on the interpolation point data, a corner detection processing unit (31) that is adapted to detect a corner (cn1) based on the radius (R) of curvature at each of the shape interpolation points (mi) and setting a candidate start point (s1) and a candidate end point (e1), and a minimum radius calculation processing unit (31) that is adapted to set a center set point (Pvc) based on the candidate start point (sl) and the candidate end point (e1) of the corner (cn1), a front set point (Pvf) on the candidate start point side with respect to the center set point (Pvc), and a rear set point (Pvb) on the candidate end point side with respect to the center set point (Pvc), and calculating a set radius of curvature of the corner (cn1) as a minimum radius. Since the set radius of curvature is calculated based on the center set point (Pvc), the front set point (Pvf) and the rear set point (Pvb), the road shape can be estimated precisely.

FIG. 22

EP 2 105 709 A2

**Description**

The present invention relates to a road shape estimating device, a road shape estimating method and a program.

Conventionally in a navigation device, the actual position, namely, the current position of a vehicle is detected for example using global positioning system (GPS), map data are read from a data recording unit, a map screen is displayed on a display unit showing a map or the like of a vehicle position representing the current position and a surrounding area of the vehicle position is displayed in the map screen. Therefore, a driver can drive the vehicle according to the vehicle position and the like displayed in the map screen.

Further, when the driver inputs a destination and sets a search condition, route search processing is performed based on the search condition, and a route from the place of departure represented by the current position to the destination is searched for based on the map data. Then a route that has been searched, namely, a searched route is displayed together with the vehicle position in the map screen, and guidance on the searched route, namely, route guidance is performed. Therefore, the driver can drive the vehicle along the displayed searched route.

Incidentally, in the navigation device, a vehicle control system is provided that changes the shift speed of the automatic transmission or changes the output of the engine using information obtained in the navigation device, so as to control traveling of the vehicle.

For this purpose, a road shape estimating device is provided in the vehicle control system, and a road shape is estimated with the road shape estimating device. The road shape estimating device reads road data from a database provided in the data recording unit of the navigation device so as to take a predetermined road link along a road on the database as a shape estimation road and obtain interpolation point data regarding interpolation points set for representing a road shape ahead of the vehicle position on the shape estimation road by plural points, namely, shape interpolation points. The road shape estimating device calculates the radius of curvature (hereinafter, simply referred to as "radius") of the road between respective shape interpolation points by a three-point calculation method with respect to three shape interpolation points adjacent to each other, detects and sets a corner on the database based on each radius, and sets a candidate start point representing a start point of the corner and sets a candidate end point representing an end point of the corner. Then, the road shape estimating device takes the smallest radius among radii at each of shape interpolation points on the shape estimation road as a minimum radius in the corner, estimates a clothoid coefficient based on the minimum radius, calculates a clothoid curve represented by an approximate equation of the corner based on the clothoid coefficient, corrects the positions of the candidate start point and the candidate end point based on the clothoid curve, estimates the road shape, and records the corrected positions of the candidate start point and the candidate end point as data representing the road shape in the data recording unit (refer to, for example, JP2005-214839A).

In the conventional road shape estimating device, however, when the smallest radius among radii calculated by three point calculation method with respect to three shape interpolation points adjacent to each other is calculated as a radius of curvature of a corner, the difference between a radius of curvature on the actual road and a calculated radius of curvature of a corner becomes large in a corner with a large radius of curvature. Thus, the road shape cannot be estimated precisely.

It is an object of the present invention to solve the problem of the conventional road shape estimating device, and to provide a road shape estimating device, a road shape estimating method and a program which are capable of estimating a road shape precisely.

The object is achieved by a road shape estimating device according to claim 1 or a method according to claim 5 or a program according to claim 9.

A center set point (also referred to as center ideal point) is set near a center of a corner, a front set point (also referred to as front ideal point) is set on a candidate start point side with respect to the center set point, and a rear set point (also referred to as rear ideal point) is set on a candidate end point side with respect to the center set point. A set radius (also referred to as ideal radius) of curvature is calculated as a minimum radius based on the center set point, the front set point and the rear set point, and thus the road shape can be estimated precisely.

Further developments of the invention are given in dependent claims.

Further features and advantages follow from a description of a specific embodiment of the present invention with reference to the drawings, which show:

FIG. 1 is a block diagram of a vehicle control system in an embodiment of the present invention;
FIG. 2 is a main flowchart showing an operation of a road shape estimation processing unit in the embodiment of the present invention;
FIG. 3 is a flowchart showing a subroutine of radius calculation processing in the embodiment of the present invention;
FIG. 4 is a diagram explaining the principle of calculating a radius in the embodiment of the present invention;
FIG. 5 is a first explanatory diagram of corner detection processing in the embodiment of the present invention;
FIG. 6 is a second explanatory diagram of the corner detection processing in the embodiment of the present invention;
FIG. 7 is a third explanatory diagram of the corner detection processing in the embodiment of the present invention;

FIG. 8 is a fourth explanatory diagram of the corner detection processing in the embodiment of the present invention;

FIG. 9 is a fifth explanatory diagram of the corner detection processing in the embodiment of the present invention;

FIG. 10 is a sixth explanatory diagram of the corner detection processing in the embodiment of the present invention;

FIG. 11 is a seventh explanatory diagram of the corner detection processing in the embodiment of the present invention;

FIG. 12 is an eighth explanatory diagram of the corner detection processing in the embodiment of the present invention;

FIG. 13 is a first diagram explaining a radius calculated by three-point calculation method;

FIG. 14 is a second diagram explaining a radius calculated by the three-point calculation method;

FIG. 15 is a flowchart showing a subroutine of minimum radius calculation processing in the embodiment of the present invention;

FIG. 16 is a first explanatory diagram of the minimum radius calculation processing in the embodiment of the present invention;

FIG. 17 is a second explanatory diagram of the minimum radius calculation processing in the embodiment of the present invention;

FIG. 18 is a third explanatory diagram of the minimum radius calculation processing in the embodiment of the present invention;

FIG. 19 is a fourth explanatory diagram of the minimum radius calculation processing in the embodiment of the present invention;

FIG. 20 is a fifth explanatory diagram of the minimum radius calculation processing in the embodiment of the present invention;

FIG. 21 is a sixth explanatory diagram of the minimum radius calculation processing in the embodiment of the present invention;

FIG. 22 is a seventh explanatory diagram of the minimum radius calculation processing in the embodiment of the present invention;

FIG. 23 is an eighth explanatory diagram of the minimum radius calculation processing in the embodiment of the present invention;

FIG. 24 is a ninth explanatory diagram of the minimum radius calculation processing in the embodiment of the present invention;

FIG. 25 is a tenth explanatory diagram of the minimum radius calculation processing in the embodiment of the present invention;

FIG. 26 is an eleventh explanatory diagram of the minimum radius calculation processing in the embodiment of the present invention;

FIG. 27 is a twelfth explanatory diagram of the minimum radius calculation processing in the embodiment of the present invention;

FIG. 28 is a table showing a clothoid coefficient map in the embodiment of the present invention;

FIG. 29 is a flowchart showing a subroutine of clothoid curve calculation processing in the embodiment of the present invention; and

FIG. 30 is an explanatory diagram of fitting processing in the embodiment of the present invention.

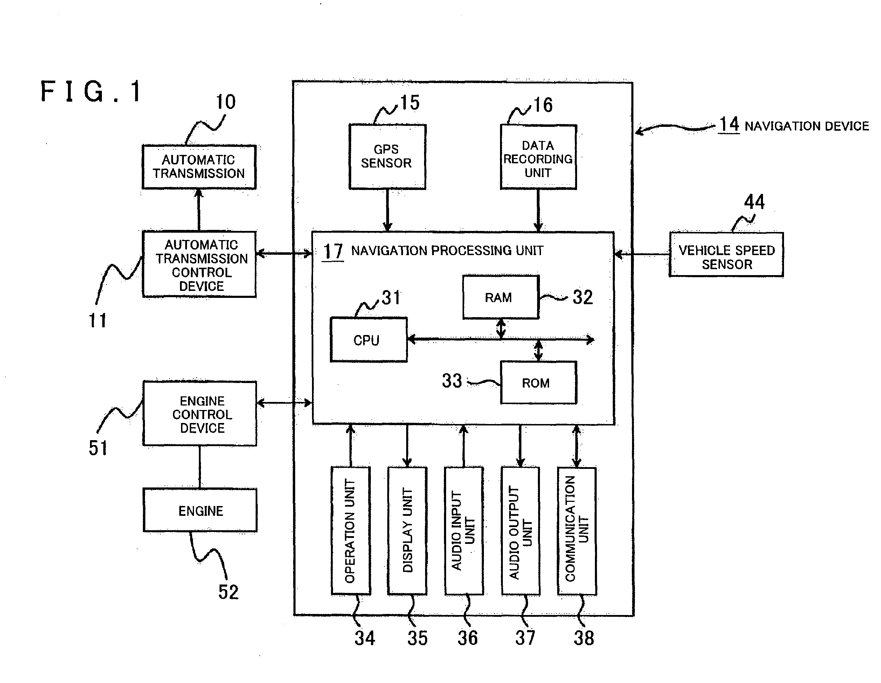

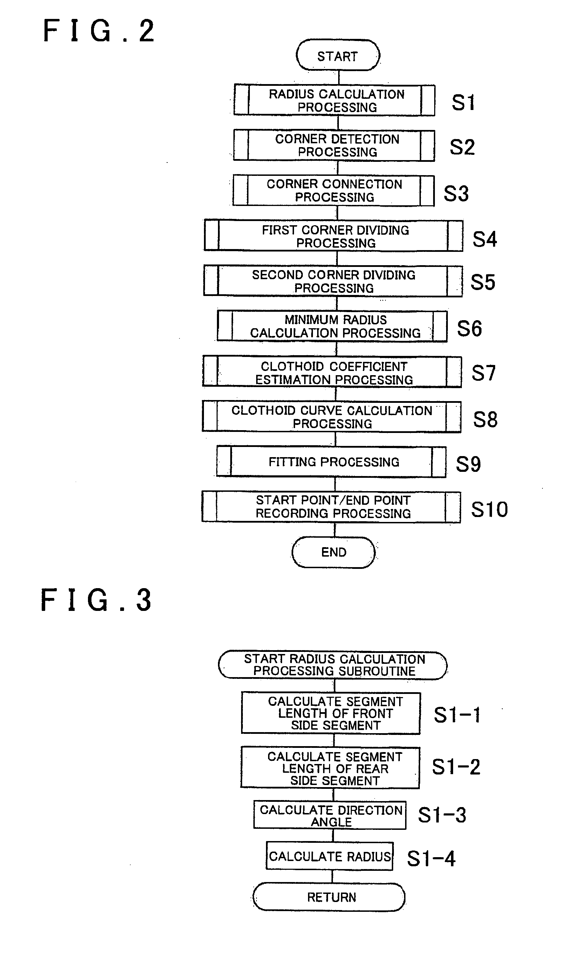

FIG. 1 is a block diagram of a vehicle control system in the embodiment of the present invention, and FIG. 2 is a main flowchart showing an operation of a road shape estimation processing unit in the embodiment of the present invention.

In the diagram, numeral 14 denotes an information terminal, for example, a navigation device as an on-vehicle device mounted in a vehicle, and the navigation device 14 includes a GPS sensor 15 as a current position detecting unit which detects the current position of the vehicle as a vehicle position and the direction of the vehicle as a vehicle direction, a data recording unit 16 as an information recording unit in which various information besides map data (not shown) are recorded, a navigation processing unit 17 performing various calculation processings such as navigation processing, an operation unit 34 as a first input unit with which a driver who is an operator performs a predetermined input by operating it, a display unit 35 as a first output unit for performing various types of display with images displayed on a screen (not shown) for informing the driver, an audio input unit 36 as a second input portion with which the driver performs a predetermined input by voice, an audio output unit 37 as a second output unit for performing audio output to inform the driver of various information, and a communication unit 38 as a transmission/reception unit functioning as a communication terminal. The GPS sensor 15, data recording unit 16, operation unit 34, display unit 35, audio input unit 36, audio output unit 37 and communication unit 38 are connected to the navigation processing unit 17. Further, a vehicle speed sensor 44 or the like as a vehicle speed detecting unit which detects a vehicle speed is connected to the navigation processing unit 17. The GPS sensor 15 detects time besides the vehicle position and the vehicle direction. Note that it is also possible to provide a direction sensor (not shown) independently from the GPS sensor 15 for detecting the vehicle direction with the direction sensor.

In the data recording unit 16, a database constituted of a map data file is provided, and map data are recorded in the database. The map data include road data regarding roads connecting intersections (including branch points), node data regarding nodes representing end points (start points and end points) of the roads, intersection data regarding the intersections, search data processed for searching, facility data regarding facilities, and the like, as well as feature data regarding features on the road. Further, the road data include data representing road links from start points to end points of the roads on the database, and data of shape interpolation points (hereinafter referred to as "interpolation point data") as a plurality of set points which are set along roads for representing road shapes on the road links. The interpolation point data include the numbers, coordinates, and the like of the shape interpolation points. Note that each node represents a start point or end point on a road link, and hence is also a shape interpolation point.

Furthermore, in the data recording unit 16, a database constituted of a statistical data file, a database constituted of a traveling history data file, and the like are provided. Statistical data are recorded in the statistical data file, and traveling history data are recorded in the traveling history data file, both as actual data.

The data recording unit 16 includes a disk (not shown) such as a hard disk, CD, DVD or optical disk for recording the various aforementioned data, and further includes a head (not shown) such as a reading/writing head for reading or writing various data. Further, a memory card or the like can be used for the data recording unit 16.

The navigation processing unit 17 has a CPU 31 as a control device performing overall control of the navigation device 14 and as an arithmetic unit, a RAM 32 used as a working memory when the CPU 31 performs various arithmetic processing, a ROM 33 in which various programs for performing a search of route to a destination, route guidance, and the like are recorded besides a control program, a flash memory (not shown) used for recording various data and programs, and the like.

As the operation unit 34, a keyboard (not shown), mouse, and/or the like provided independently from the display unit 35 can be used. Further, as the operation unit 34, it is possible to use a touch panel which allows to perform a predetermined input operation by touching or clicking image operation units such as various keys, switches, buttons, and the like which are displayed by images on a screen formed on the display unit 35.

A display is used as the display unit 35, which allows to display, on/in various screens displayed on the display unit 35, the vehicle position, vehicle direction and the like, as well as a map, a searched route, guidance information along the searched route, traffic information, and so on, and to display the distance to the next intersection on the searched route and a traveling direction on the next intersection.

Further, the audio input unit 36 comprises a microphone (not shown) or the like, and is adapted to allow input of necessary information by voice. Furthermore, the audio output unit 37 comprises an audio synthesis device (not shown) and a speaker (not shown), and performs route guidance of the searched route by audio output.

The communication unit 38 comprises a beacon receiver (not shown) for receiving various information such as current traffic information and general information transmitted from a vehicle information and communication system center, a FM receiver (not shown) for receiving the various information as an FM multiplex broadcast via an FM broadcast station, and so on. Further, the communication unit 38 is able to receive data such as map data, statistical data, and traveling history data besides information such as traffic information and general information via a network (not shown) from an information center (not shown).

Note that the navigation processing unit 17, CPU 31, and so on function as a computer independently or in combination of two or more of them, and performs arithmetic processing based on various programs, data, and the like. Further, the data recording unit 16, RAM 32, ROM 33, flash memory, and so on form a storage device and a recording medium. As the arithmetical unit, an MPU or the like can be used instead of the CPU 31.

Note that numeral 10 denotes an automatic transmission, numeral 11 denotes an automatic transmission control device, numeral 51 denotes an engine control unit, and numeral 52 denotes an engine. Further, the automatic transmission control device 11, the navigation device 14, the engine control device 51, and the like form a vehicle control system.

Next, a basic operation of the navigation device 14 with the above structure will be explained.

First, the operation unit 34 is operated by the driver and the navigation device 14 is started, a current position reading processing unit (not shown) of the CPU 31 performs current position reading processing so as to read the vehicle position and the vehicle direction detected by the GPS sensor 15. Then a matching processing unit (not shown) of the CPU 31 performs matching processing and identifies the vehicle position by determining on which of the road links the vehicle is located based on the trace of the read vehicle position, and shapes, arrangements, and the like of road links forming roads in the surrounding area of the vehicle position.

Subsequently, a basic information obtaining processing unit (not shown) of the CPU 31 performs basic information obtaining processing to read and obtain the map data from the data recording unit 16. Note that the map data can be obtained from the information center or the like, and in this case, the basic information obtaining processing unit downloads the received map data into the flash memory.

A display processing unit (not shown) of the CPU 31 performs display processing to form various screens on the display unit 35. For example, a map display processing unit of the display processing unit performs map display processing to form a map screen on the display unit 35 so as to display a surrounding map and further display the vehicle position and the vehicle direction on the map screen.

Therefore, the driver can drive the vehicle according to the surrounding map, the vehicle position and the vehicle direction.

Further, when the driver inputs a destination by operating the operation unit 34, a destination setting processing unit (not shown) of the CPU 31 performs destination setting processing to set the destination. Note that a place of departure can be inputted and set as necessary. Further, it is possible to register a predetermined point in advance, and set the registered point as a destination. Subsequently, when the driver inputs a search condition by operating the operation unit 34, a search condition setting processing unit (not shown) of the CPU 31 performs search condition setting processing to set the search condition.

When the destination and the search condition are set in this manner, a route search processing unit (not shown) of the CPU 31 performs route search processing to read the vehicle position, vehicle direction, destination, search condition and the like and also read the search data and the like from the data recording unit 16, search for a route from a place of departure represented by the vehicle position to the destination with the search condition based on the vehicle position, vehicle direction, destination, search data, and the like, and output route data representing a searched route. At this time, in the route search processing, the route having a smallest sum of link costs added respectively to road links is taken as the searched route. Note that the place of departure can also be a predetermined point set by the driver instead of the vehicle position, so as to search for a route from the predetermined point to the destination.

Subsequently, a guidance processing unit (not shown) of the CPU 31 performs guidance processing to perform route guidance. For this purpose, a guidance display processing unit of the guidance processing unit performs guidance display processing to read the route data and display the searched route on the map screen based on the route data.

Note that when it is necessary for example to turn the vehicle to the right or left at an intersection that is a subject of route guidance. The intersection is set as a guidance intersection as, i.e., a subject of performing guidance on direction how and where to drive the vehicle. An audio output processing unit of the guidance processing unit performs audio output processing to perform the route guidance by audio output before the vehicle reaches the guidance intersection.

Further, a guidance point enlarged view formation processing unit of the guidance processing unit performs guidance point enlarged view formation processing to form, in a predetermined region of the map screen, an enlarged view of the guidance intersection, namely, an intersection enlarged view as a guidance point enlarged view before the vehicle reaches the guidance intersection, and thereby perform route guidance with the intersection enlarged view. For this purpose, when the vehicle reaches a location that is separated by a set distance before (or on the vehicle position side of) the guidance intersection on the searched route, the intersection enlarged view is displayed. In this case, a surrounding map of the guidance intersection, a searched route, and a landmark of a facility or the like to be a marker at the guidance intersection are displayed on the intersection enlarged view.

Now, in this embodiment, information obtained in the navigation device 14 is transmitted to the automatic transmission control device 11 so as to change the shift speed of the automatic transmission 10 corresponding to the road shape ahead of the vehicle position, or transmitted to the engine control device 51 so as to change the output of the engine 52 corresponding to the road shape ahead of the vehicle position, thereby controlling traveling of the vehicle.

For this purpose, the CPU 31 functions as a road shape estimating device, and a road shape estimation processing unit (not shown) of the CPU 31 performs road shape estimation processing so as to estimate the road shape by a method which will be described later. A traveling control processing unit (not shown) of the CPU 31 performs traveling control processing to transmit a signal for changing the shift speed of the automatic transmission 10 or changing the output of the engine 52 according to the estimated road shape to the automatic transmission control device 11, the engine control device 51, or the like.

Next, an operation of the road shape estimation processing unit will be explained according to FIG. 2.

First, a data obtaining processing unit of the road shape estimation processing unit performs data obtaining processing to set a predetermined region ahead of the vehicle position including the road to be a target of estimating a road shape as a road shape estimation range, reads road data from the data recording unit 16, and obtains node data within the road shape estimation range.

In this case, within the road shape estimation range, estimation of road shape is performed in sequence regarding road links between respective nodes adjacent to each other from the first node to the last node among the respective nodes represented by the node data. Note that in this case, each road link for which estimation of a road shape is performed in a road on the database is referred to as a shape estimation road.

Then, for performing estimation of a road shape for each shape estimation road, the data obtaining processing unit obtains interpolation point data of shape interpolation points on the shape estimation road ahead of the vehicle position. In addition, in this embodiment, the data obtaining processing unit obtains the node data and the interpolation point data by reading them from the data recording unit 16, but they can be obtained also by receiving via a network from the information center or the like.

Next, a radius calculation processing unit of the road shape estimation processing unit performs radius calculation processing to calculate a radius (radius of curvature) in each shape interpolation point of the shape estimation road by three-point calculation method based on the interpolation point data of shape interpolation points on the shape estimation road ahead of the vehicle position. Subsequently, a corner detection processing unit of the road shape estimation processing unit performs corner detection processing to detect a corner in the shape estimation road on the database based on the calculated radius, and sets a shape interpolation point where the corner starts as a candidate start point, and a shape interpolation point where the corner ends on the database as a candidate end point.

When a corner that should be regarded as one corner on the actual road is detected as a plurality of corners depending on the way of setting the shape interpolation points on the database, a corner connection processing unit of the road shape estimation processing unit then performs corner connection processing so as to connect the detected corners.

Next, when corners that should be regarded as a plurality of corners on the actual road are detected as one corner depending on the way of setting the shape interpolation points on the database, first and second corner dividing processing units of the road shape estimation processing unit perform first and second corner dividing processing to divide the detected corner. In this case, in the first corner dividing processing, the detected corner is divided when a predetermined shape interpolation point in the corner has a radius that is equal to or larger than a threshold for dividing the corner, and in the second corner dividing processing, the detected corner is divided when a segment between predetermined shape interpolation points in the corner has a length that is equal to or longer than a threshold.

In this manner, when connection of corners or dividing of a corner is performed to set an appropriate corner based on shape interpolation points, a minimum radius calculation processing unit of the road shape estimation processing unit performs minimum radius calculation processing to calculate an appropriate minimum radius for estimating a clothoid coefficient for each corner.

Subsequently, a clothoid coefficient estimation processing unit of the road shape estimation processing unit performs clothoid coefficient estimation processing to estimate a clothoid coefficient based on the minimum radius. A clothoid curve calculation processing unit of the road shape estimation processing unit performs clothoid curve calculation processing to form an approximate equation of the corner based on the clothoid coefficient and calculate a clothoid curve representing a road shape of the corner.

In this manner, when the clothoid curve is calculated, a fitting processing unit of the road shape estimation processing unit performs fitting processing to correct the candidate start point and the candidate end point by matching the clothoid curve with the shape interpolation points on the corner, and thereby set the start point and the end point of the corner to positions approximating to a point where the corner starts and a point where the corner ends on the actual road.

Then a start point/end point recording processing unit of the road shape estimation processing unit performs start point/end point recording processing to record the start point and the end point as data representing the road shape in the data recording unit 16. In this manner, the road shape is estimated.

Next, the flowchart will be explained.

In step S1, the radius calculation processing is performed.

In step S2, the corner detection processing is performed.

In step S3, the corner connection processing is performed.

In step S4, the first corner dividing processing is performed.

In step S5, the second corner dividing processing is performed.

In step S6, the minimum radius calculation processing is performed.

In step S7, the clothoid coefficient estimation processing is performed.

In step S8, the clothoid curve calculation processing is performed.

In step S9, the fitting processing is performed.

In step S10, the start point/end point recording processing is performed, and the processing is finished.

Next, the subroutine of the radius calculation processing in step S1 of FIG. 2 will be explained.

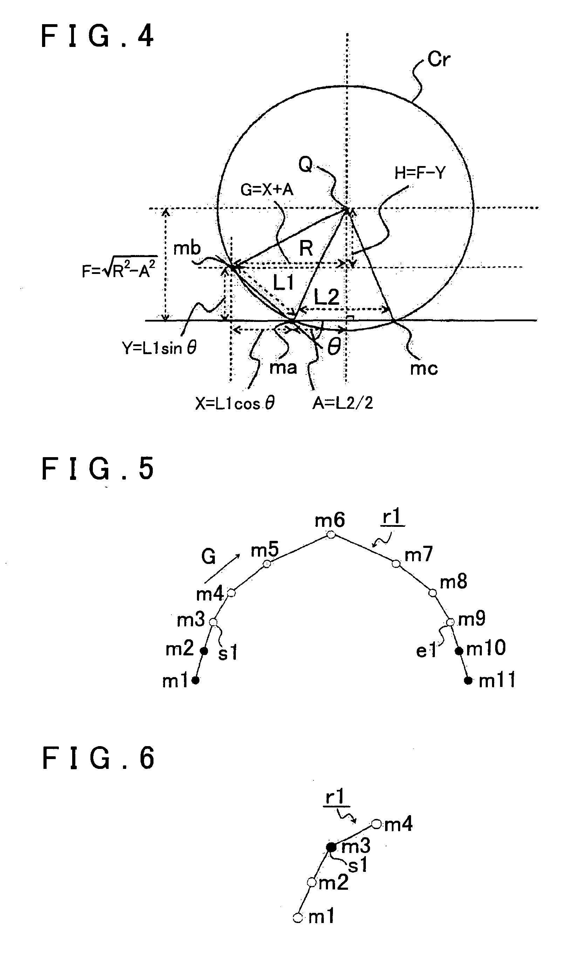

FIG. 3 is a flowchart showing the subroutine of the radius calculation processing in the embodiment of the present invention, and FIG. 4 is a diagram explaining the principle of calculating a radius in the embodiment of the present invention.

As shown in FIG. 4, a shape interpolation point to be a target of radius calculation processing is designated as target point ma, a shape interpolation point that is located immediately preceding the target point ma (on the vehicle position side) is designated as preceding adjacent point mb, and a shape interpolation point that is located immediately succeeding the target point ma (on the side to depart from the vehicle position) is designated as succeeding adjacent point mc. The segment length of a segment on a side nearer than the target point ma (hereinafter referred to as "front side segment") that connects the target point ma and the preceding adjacent point mb is designated as L1, and the segment length of a segment on a side farther than the target point ma (hereinafter referred to as "rear side segment") that connects the target point ma and the succeeding adjacent point mc is designated as L2. Further, when the circle passing through the target point ma, the preceding adjacent point mb and the succeeding adjacent point mc is designated as Cr, the center of the circle Cr is designated as Q and the radius of the circle Cr is designated as R. Furthermore, at the target point ma, the angle which the rear side segment forms with respect to the front side segment is designated as direction angle θ.

A direction to connect the target point ma and the succeeding adjacent point mc is x-axis direction and a direction at a right angle with respect to the x axis direction is y-axis direction, and when the distance between the target point ma and the preceding adjacent point mb in the x-axis direction is designated as X, the distance between the target point ma and the center Q in the x-axis direction is designated as A, the distance between the preceding adjacent point mb and the center Q in the x-axis direction is designated as G, the distance between the target point ma and the preceding adjacent point mb in the y-axis direction is Y, the distance between the preceding adjacent point mb and the center Q in the y-axis direction is designated as H, and the distance between the target point ma and the center Q on the y-axis direction is designated as F, following equations hold true:

$$X = L1\cos\theta$$

$$A = L2/2$$

$$G = X + A$$

$$Y = L1\sin\theta$$

$$F = \sqrt{(R^2 - A^2)}$$

$$H = F - Y$$

In this case, the sum of the square of the distance G and the square of the distance H is equal to the square of the radius R, and thus the relationship of equation (1) is satisfied.
$$R^2 = G^2 + H^2 \ ... \ (1)$$

Next, by substituting the above respective values into the distances G, H of the equation (1), following equation (2) can be obtained.
$$R^2 = X^2 + 2XA + A^2 + R^2 - A^2 - 2Y\sqrt{(R^2 - A^2)} + Y^2 \ ... \ (2)$$

Subsequently, by modifying the equation (2), equations (3) to (6) can be obtained.
$$2Y\sqrt{(R^2 - A^2)} = X^2 + Y^2 + 2XA \dots (3)$$

$$R^2 - A^2 = \{(X^2 + Y^2 + 2XA)/2Y\}^2 \dots (4)$$

$$R^2 = \{(X^2 + Y^2 + 2XA)/2Y\}^2 + A^2 \dots (5)$$

$$R^2 = (L1^2 + 2L1 \cdot L2 \cdot \cos\theta + L2^2)/(2\sin\theta)^2 \dots (6)$$

From the equation (6), it can be seen that the radius R is a function of the segment lengths L1, L2 and the direction angle θ.

Accordingly, the radius calculation processing unit reads the interpolation point data, calculates the segment lengths L1, L2 based on respective coordinates of the target point ma, the preceding adjacent point mb and the succeeding adjacent point mc, and calculates the direction angle θ.

Subsequently, the radius calculation processing unit calculates the radius R of the circle Cr by aforementioned equation (6) based on the segment lengths L1, L2 and the direction angle θ. In this manner, the radius R at the target point ma can be calculated on the shape estimation road.

Next, the flowchart will be explained.

In step S1-1, the segment length L1 of the front side segment is calculated.

In step S1-2, the segment length L2 of the rear side segment is calculated.

In step S1-3, the direction angle θ is calculated.

In step S1-4, the radius R is calculated and the process returns to the main routine.

Note that in this embodiment, the direction angle θ and the radius R are calculated based on calculations by the radius calculation processing unit, but it is also possible to record a direction angle θ and a radius R which are calculated in advance in the database of the data recording unit 16 as part of the road data, and perform calculation by reading them from the data recording unit 16.

Next, the corner detection processing in step S2 of FIG. 2 will be explained.

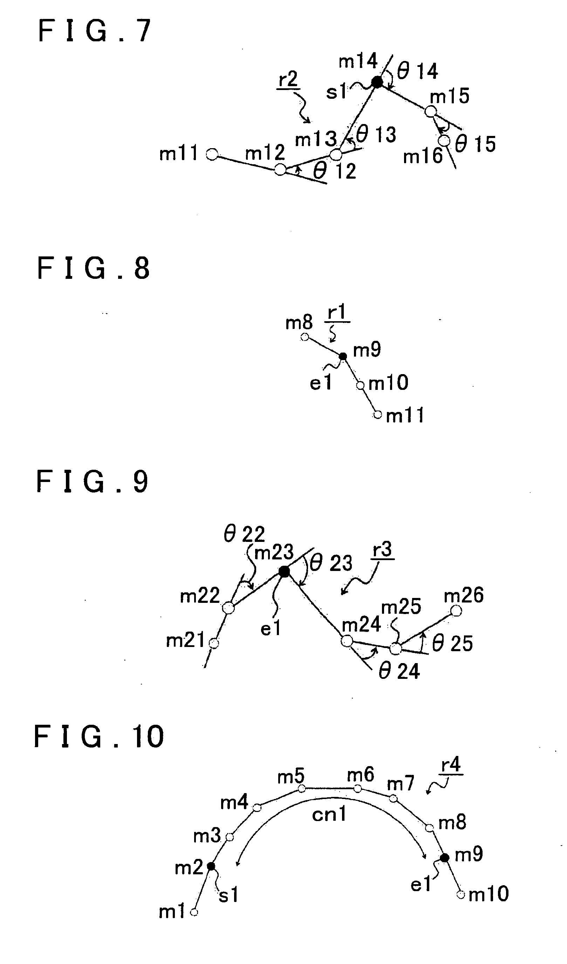

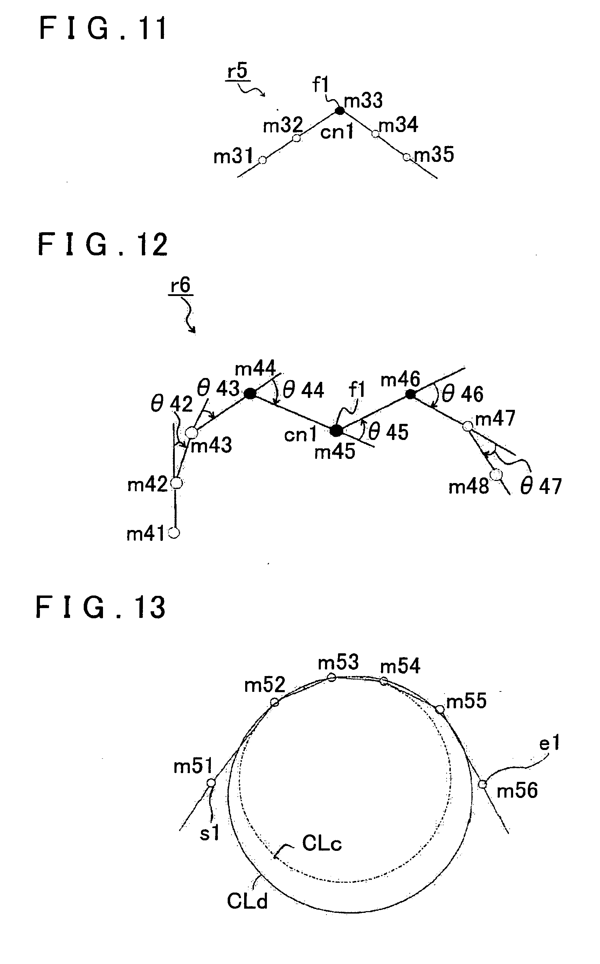

FIG. 5 is a first explanatory diagram of the corner detection processing in the embodiment of the present invention. FIG. 6 is a second explanatory diagram of the corner detection processing in the embodiment of the present invention. FIG. 7 is a third explanatory diagram of the corner detection processing in the embodiment of the present invention. FIG. 8 is a fourth explanatory diagram of the corner detection processing in the embodiment of the present invention. FIG. 9 is a fifth explanatory diagram of the corner detection processing in the embodiment of the present invention. FIG. 10 is a sixth explanatory diagram of the corner detection processing in the embodiment of the present invention. FIG. 11 is a seventh explanatory diagram of the corner detection processing in the embodiment of the present invention. FIG. 12 is an eighth explanatory diagram of the corner detection processing in the embodiment of the present invention.

In the diagrams, ri (i = 1, 2, ...) is a shape estimation road set between two nodes (not shown), mi (i = 1, 2, ...) are a plurality of shape interpolation points set in order from the near side in the traveling direction of the vehicle (arrow G direction) along the shape estimation road ri, and θi (i = 1,2,...) is a direction angle at each shape interpolation point mi. Note that the direction angle θi is an angle which the rear side segment forms with respect to the front side segment. When the rear side segment is located on the right side in the traveling direction of the vehicle with respect to the front side segment, the direction angle θi takes a positive value. When the rear side segment is located on the left side in the traveling direction of the vehicle with respect to the front side segment, the direction angle θi takes a negative value.

First, a candidate start point/candidate end point setting processing unit of the corner detection processing unit performs candidate start point/candidate end point setting processing to read the radius Ri (i = 1, 2, ...) at each shape interpolation point mi, determine whether the radius Ri is equal to or smaller than a threshold Rth (1000 [m] in this embodiment) for corner detection which is set in advance, and extract any shape interpolation point with a radius equal to or smaller than the threshold Rth. In FIG. 5, the shape interpolation points m3 to m9 are close to a straight line, and they are determined to have radii Ri that are equal to or lower than the threshold Rth and extracted.

Subsequently, the candidate start point/candidate end point setting processing unit determines whether or not there are plural consecutive shape interpolation points (hereinafter referred to as a "consecutive shape interpolation point group") among the extracted shape interpolation points. When there is a consecutive shape interpolation point group, the unit takes the shape interpolation point on the nearest side (vehicle position side) in the consecutive shape interpolation point group as a candidate start point. In FIG. 5 and FIG. 6, the consecutive shape interpolation point group is formed by the shape interpolation points m3 to m9, and the shape interpolation point m3 is taken as the candidate start point s1.

Further, the candidate start point/candidate end point setting processing unit reads the direction angles θ calculated by the radius calculation processing unit for the extracted shape interpolation points sequentially from the near side, and determines whether or not the positiveness or negativeness of the direction angle reverses at a predetermined shape interpolation point (the direction of the direction angle reverses with respect to the immediately preceding shape interpolation point). When the positiveness or negativeness of the direction angle reverses at the predetermined shape interpolation point, the unit determines whether or not the positiveness or negativeness reverses at the immediately succeeding shape interpolation point. Then, when the positiveness or negativeness of the direction angle reverses at the predetermined shape interpolation point and the positiveness or negativeness does not reverse at the immediately succeeding shape interpolation point, the predetermined shape interpolation point is taken as the candidate start point s1. When shape interpolation points m11 to m16 are set on a shape estimation road r2 having a shape as shown in FIG. 7, direction angles θ12 and θ13 take negative values and direction angles θ14 and θ15 take positive values at the shape interpolation points m12 to m15. That is, the positiveness or negativeness of the direction angle θ14 reverses from negative to positive at the shape interpolation point m14, and the positiveness or negativeness of the direction angle θ15 remains positive and does not reverse at the immediately succeeding shape interpolation point m15. Thus, the shape interpolation point m14 is taken as the candidate start point s1.

Next, the candidate start point/candidate end point setting processing unit determines whether or not there is a consecutive shape interpolation point group among the respective extracted shape interpolation points. When there is a consecutive shape interpolation point group, the unit takes the shape interpolation point on the farthest side (side to depart from the vehicle position) in the consecutive shape interpolation point group as a candidate end point. In FIG. 5 and FIG. 8, the consecutive shape interpolation point group is formed by the shape interpolation points m3 to m9, and the shape interpolation point m9 is taken as the candidate end point e1.

Further, the candidate start point/candidate end point setting processing unit determines whether the positiveness or negativeness of the direction angle reverses at a predetermined shape interpolation point. When the positiveness or negativeness of the direction angle does not reverse at the predetermined shape interpolation point, the unit determines whether or not the positiveness or negativeness reverses at the immediately succeeding shape interpolation point. Then, when the positiveness or negativeness of the direction angle does not reverse at the predetermined shape interpolation point and the positiveness or negativeness reverses at the immediately succeeding shape interpolation point, the predetermined shape interpolation point is taken as a candidate end point e1. When shape interpolation points m21 to m26 are set on a shape estimation road r3 having a shape as shown in FIG. 9, direction angles θ22 and θ23 take positive values and direction angles θ24 and θ25 take negative values at the shape interpolation points m22 to m25. That is, the positiveness or negativeness of the direction angle θ23 remains positive and does not reverse at the shape interpolation point m23, and the positiveness or negativeness of the direction angle θ24 reverses from positive to negative at the immediately succeeding shape interpolation point m24. Thus, the shape interpolation point m23 is taken as a candidate end point e1.

In this manner, when the candidate start point and the candidate end point are set, a corner setting processing unit of the corner detection processing unit performs corner setting processing, and sets a corner between the candidate start point and the candidate end point. On a shape estimation road r4 having a shape as shown in FIG. 10, a shape interpolation point m2 out of shape interpolation points m1 to m10 is taken as the candidate start point s1, the shape interpolation point m9 is taken as the candidate end point e1, and a corner cn1 is set between the candidate start point s1 and the candidate end point e1.

Note that when the radius of the predetermined shape interpolation point is equal to or smaller than the threshold Rth and both the radius of the immediately preceding shape interpolation point and the radius of the immediately succeeding shape interpolation point are larger than the threshold Rth, the candidate start point/candidate end point setting processing unit sets the predetermined shape interpolation point as a single point combining a candidate start point and a candidate end point, and the corner setting processing unit sets a corner to the predetermined shape interpolation point. Further, on a shape estimation road r5 having a shape as shown in FIG. 11, a shape interpolation point m33 among shape interpolation points m31 to m35 is set to a single point f1, and a corner cn1 is set to the shape interpolation point m33.

Furthermore, when the positiveness or negativeness of the direction angle reverses at the predetermined shape interpolation point and the positiveness or negativeness of the direction angle reverses at the immediately succeeding shape interpolation point, the candidate start point/candidate end point setting processing unit sets the predetermined shape interpolation point as a single point.

On a shape estimation road r6 having a shape as shown in FIG. 12, direction angles θ42 to θ44, θ46 and θ47 at shape interpolation points m42 to m44, m46 and m47 among shape interpolation points m41 to m48 take positive values, and a direction angle θ45 at a shape interpolation point m45 takes a negative value. In this case, the positiveness or negativeness of the direction angle θ45 reverses from positive to negative at the shape interpolation point m45, and the positiveness or negativeness of the direction angle θ46 reverses from negative to positive at the immediately succeeding shape interpolation point m46. Thus, the shape interpolation point m45 is set to a single point f1 and a corner cn1 is set to the shape interpolation point m45.

Subsequently, the corner setting processing unit sets three corners cn1 to cn3 before and after the single point f1 and at the single point f1. Note that, in this case, the numbers of the corners are added sequentially from the near side, and the number of a candidate start point and the number of a candidate end point are added corresponding to the numbers of the corners.

In this manner, when a corner is set on a shape estimation road, the recording processing unit of the corner detection processing unit performs recording processing to record the number of corners in the shape estimation road, the number of a candidate start point, the number of a candidate end point, and so on in the RAM 32 (FIG. 1).

Now, as described above, in the clothoid coefficient estimation processing, the clothoid coefficient is estimated based on the minimum radius in the corner detected on the shape estimation road. However, when the smallest radius among radii calculated by the three-point calculation method in the radius calculation processing is used as a minimum radius, the minimum radius tends to be smaller than a value that should be used originally.

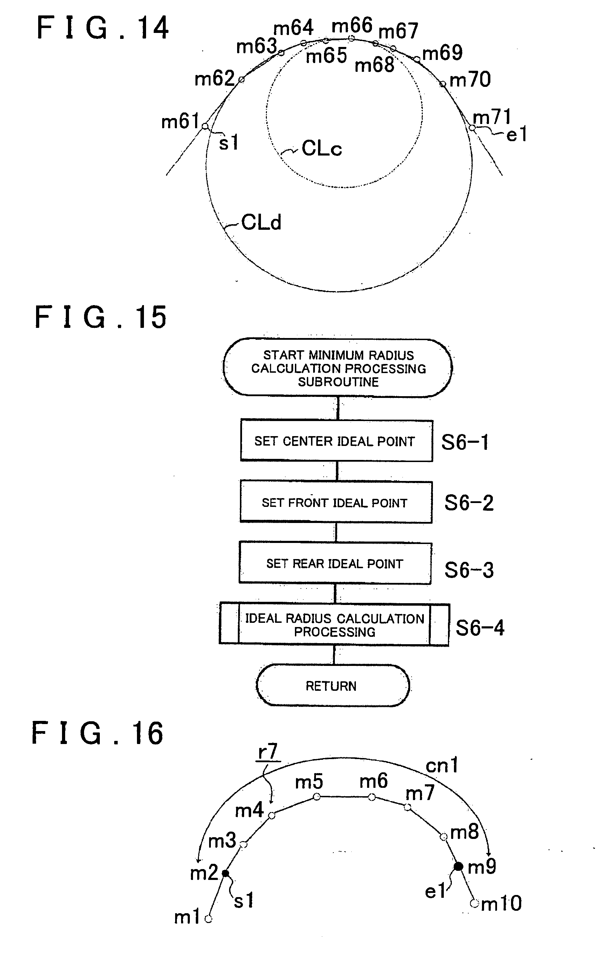

FIG. 13 is a first diagram explaining a radius calculated by the three-point calculation method, and FIG. 14 is a second diagram explaining a radius calculated by the three-point calculation method.

In the diagrams, reference numerals m51 to m56, m61 to m71 denote shape interpolation points, reference numeral s1 denotes a candidate start point, and reference numeral e1 denotes a candidate end point.

When the smallest radius among radii calculated in the radius calculation processing is used as a minimum radius, in FIG. 13 the shape interpolation point m53 to be a target of the radius calculation processing is designated as a target point, the shape interpolation point m52 that is located immediately preceding the target point is designated as a preceding adjacent point, the shape interpolation point m54 that is located immediately succeeding the target point is designated as a succeeding adjacent point, and a radius of a circle Clc passing the target point, the preceding adjacent point and the succeeding adjacent point is designated as a radius at the shape interpolation point m53. Here, when an approximate curve is calculated based not only on the three points of target point, preceding adjacent point and succeeding adjacent point but on coordinates of the shape interpolation points m51 to m56 to calculate a radius of curvature, this radius of curvature takes a value close to a radius of curvature on the actual road. Then when a circle having this radius of curvature is drawn, it becomes CLd. Accordingly, the radius calculated by the three-point calculation method becomes smaller than a radius of curvature on the actual road.

Further, in FIG. 14, the shape interpolation point m66 to be a target of the radius calculation processing is designated as a target point, the shape interpolation point m65 that is located immediately preceding the target point is designated as a preceding adjacent point, the shape interpolation point m67 that is located immediately succeeding the target point is designated as a succeeding adjacent point, and a radius of a circle Clc passing the target point, the preceding adjacent point and the succeeding adjacent point is designated as a radius at the shape interpolation point m66. Here, when an approximate curve is calculated based not only on the three points of target point, preceding adjacent point and succeeding adjacent point but on coordinates of the shape interpolation points m61 to m71 to calculate a radius of curvature, the radius of curvature takes a value close to a radius of curvature on the actual road. Then when a circle having this radius of curvature is drawn, it becomes CLd. Also in this case the radius calculated by the three-point calculation method becomes smaller than a radius of curvature on the actual road. Moreover, when the shape of the corner becomes larger, the difference between the radius calculated by the three-point calculation method and a radius of curvature on the actual road becomes larger accordingly.

Therefore, when the smallest radius among radii calculated by the radius calculation processing unit is used as a minimum radius, the minimum radius becomes smaller than a value that should be used originally. Thus, when the clothoid coefficient is estimated based on the minimum radius, the clothoid curve cannot be calculated properly, and the road shape cannot be estimated precisely.

Accordingly, in this embodiment, three ideal points are set in the detected corner, a radius is calculated based on coordinates of the ideal points, and the calculated radius is designated as a minimum radius.

Next, the subroutine of the minimum radius calculation processing in step S6 of FIG. 2 will be explained. In this case, there will be explained the case where, as described above, corners are connected in the corner connection processing, and a minimum radius is calculated in a corner after a corner is divided in the first and second corner dividing processing.

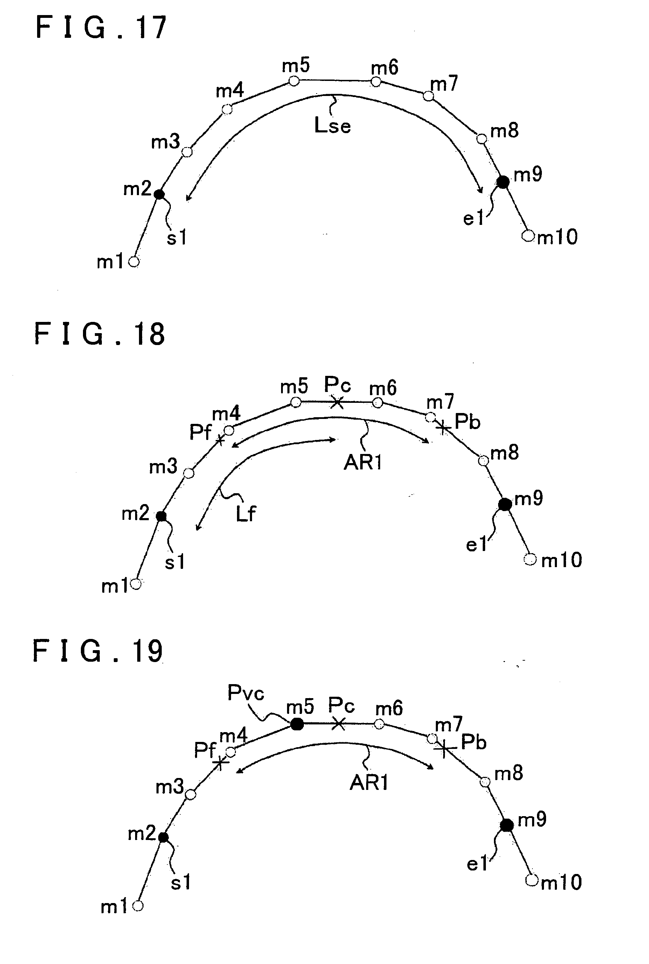

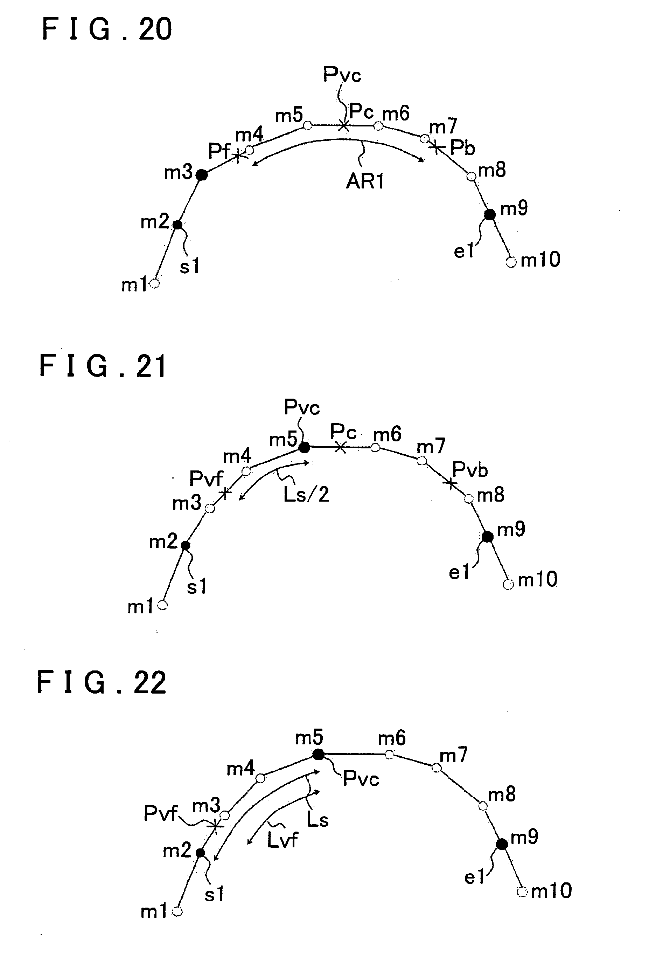

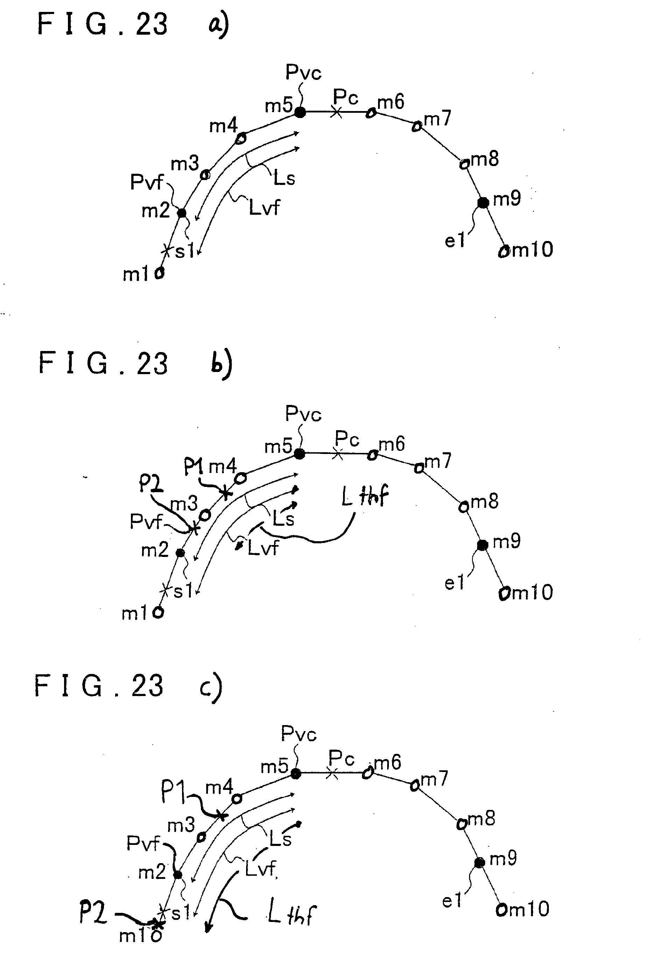

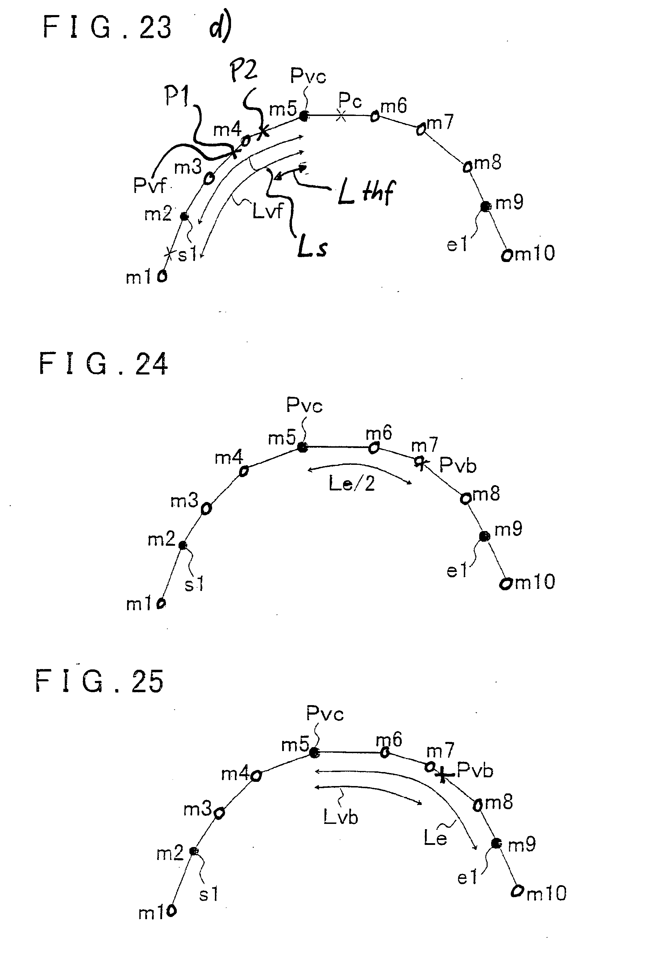

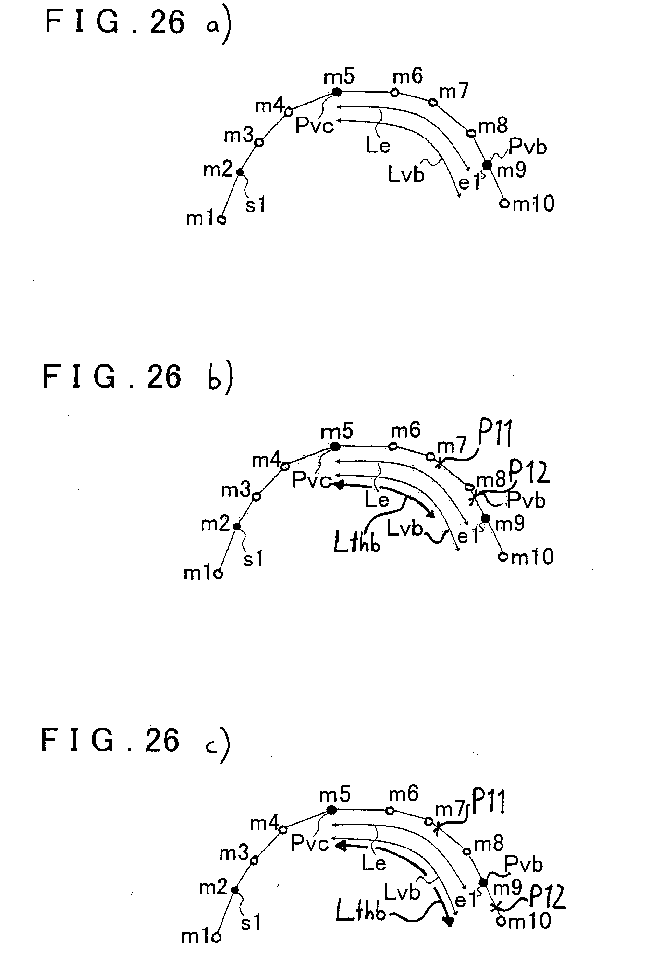

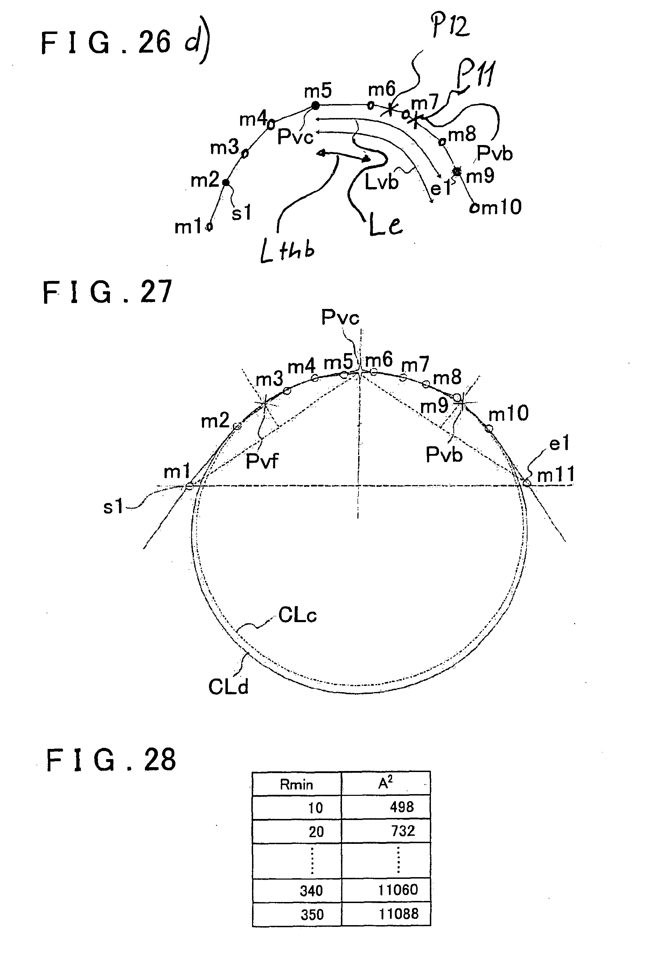

FIG. 15 is a flowchart showing the subroutine of the minimum radius calculation processing in the embodiment of the present invention. FIG. 16 is a first explanatory diagram of the minimum radius calculation processing in the embodiment of the present invention. FIG. 17 is a second explanatory diagram of the minimum radius calculation processing in the embodiment of the present invention. FIG. 18 is a third explanatory diagram of the minimum radius calculation processing in the embodiment of the present invention. FIG. 19 is a fourth explanatory diagram of the minimum radius calculation processing in the embodiment of the present invention. FIG. 20 is a fifth explanatory diagram of the minimum radius calculation processing in the embodiment of the present invention. FIG. 21 is a sixth explanatory diagram of the minimum radius calculation processing in the embodiment of the present invention. FIG. 22 is a seventh explanatory diagram of the minimum radius calculation processing in the embodiment of the present invention. FIG. 23 is an eighth explanatory diagram of the minimum radius calculation processing in the embodiment of the present invention. FIG. 24 is a ninth explanatory diagram of the minimum radius calculation processing in the embodiment of the present invention. FIG. 25 is a tenth explanatory diagram of the minimum radius calculation processing in the embodiment of the present invention. FIG. 26 is an eleventh explanatory diagram of the minimum radius calculation processing in the embodiment of the present invention. FIG. 27 is a twelfth explanatory diagram of the minimum radius calculation processing in the embodiment of the present invention.

In FIG. 16, reference numeral r7 denotes a shape estimation road, reference numeral cn1 denotes a corner, reference numeral mi denotes a shape interpolation point, reference numeral s1 denotes a candidate start point of the corner cn1, and reference numeral e1 denotes a candidate end point of the corner cn1.

First, a center ideal point setting processing unit of the minimum radius calculation processing unit performs center ideal point setting processing to set a center ideal point Pvc, also referred to as center set point, as a first ideal point, also referred to as first set point. For this purpose, a corner center vicinity setting processing unit of the center ideal point setting processing unit performs corner center vicinity setting processing to add segment lengths between respective shape interpolation points m2 to m9, and thereby calculate the distance from the candidate start point s1 of the corner cn1 to the candidate end point e1 shown in FIG. 17 as a corner length Lse.

Subsequently, the corner center vicinity setting processing unit sets a corner intermediate point Pc to a position separated from the candidate start point s1 on the candidate end point e1 side by a distance Lf,

$$Lf = Lse/2$$

which is half the corner length Lse, that is, the center between the candidate start point s1 and the candidate end point e1, sets a corner front point Pf to a position separated from the corner intermediate point Pc by a distance $Lf/\varepsilon1$ on a side nearer than the corner intermediate point Pc between the corner intermediate point Pc and the candidate start point s1, sets a corner rear point Pb to a position separated from the corner intermediate point Pc by a distance $Lf/\varepsilon2$ on a side farther than the corner intermediate point Pc between the corner intermediate point Pc and the candidate end point e1, and sets the range from the corner front point Pf to the corner rear point Pb as a corner center vicinity AR1.

In addition, in this embodiment, $\varepsilon1$, $\varepsilon2$ are set values for setting the front point Pf on the candidate start point s1 side with respect to the corner intermediate point Pc and the corner rear point Pb on the candidate end point e1 side with respect to the corner intermediate point Pc, and are set to 2 in this embodiment.

Next, a center ideal point determination processing unit of the center ideal point setting processing unit performs center ideal point determination processing to determine whether there is a shape interpolation point having a smallest radius among radii Ri calculated in the radius calculation processing in the corner center vicinity AR1. When there is a shape interpolation point having a smallest radius, the center ideal point determination processing unit sets this shape interpolation point as the center ideal point Pvc. As shown in FIG. 19, for example, when a shape interpolation point m5 has a smallest radius among the radii Ri, the center ideal point determination processing unit sets the shape interpolation point m5 as the center ideal point Pvc since the shape interpolation point m5 is in the corner center vicinity AR1.

Further, when there is no shape interpolation point having a smallest radius in the corner center vicinity AR1, the center ideal point determination processing unit sets the corner intermediate point Pc as the center ideal point Pvc. As shown in FIG. 20, for example, when a shape interpolation point m3 has a smallest radius among the radii Ri, the center ideal point determination processing unit sets the corner intermediate point Pc as the center ideal point Pvc since the shape interpolation point m3 is not in the corner center vicinity AR1.

When the center ideal point Pvc is set in this manner, a front ideal point setting processing unit of the minimum radius calculation processing unit performs front ideal point setting processing to set a front ideal point Pvf (also referred to as front set point) as a second ideal point (also referred to as second set point). For this purpose, a distance setting processing unit of the front ideal point setting processing unit performs distance setting processing to compare, when a distance from the center ideal point Pvc to the candidate start point s1 is Ls, a distance Ls/2 which is half the distance Ls shown in FIG. 21 with a threshold Lsth (for example, 35 [m]). When the distance Ls/2 is equal to or longer than the threshold Lsth, the distance setting processing unit then sets the distance Ls/2 as a front ideal point distance Lvf of the front ideal point Pvf from the center ideal point Pvc. When the distance Ls/2 is shorter than the threshold Lsth, the distance setting processing unit then sets the threshold Lsth as the front ideal point distance Lvf.

Subsequently, the distance setting processing unit compares the front ideal point distance Lvf with the distance Ls. As shown in FIG. 22, when the front ideal point distance Lvf is shorter than the distance Ls, a front ideal point determination processing unit of the front ideal point setting processing unit performs front ideal point determination processing to set the front ideal point Pvf to a position separated from the center ideal point Pvc by the front ideal point distance Lvf on the side of the center ideal point Pvc facing the candidate start point s1. Further, as shown in FIG. 23, when the front ideal point distance Lvf is equal to or longer than the distance Ls, the front ideal point determination processing unit sets the front ideal point Pvf to a position (candidate start point s1) separated from the center ideal point Pvc by the distance Ls on the side of the center ideal point Pvc facing the candidate start point s1 (Fig. 23a).

In determining the front ideal point Pvf, a threshold Lthf from the center ideal point Pvc may be considered optionally in addition. In this case, when an intermediate point between the candidate start point s1 and the center ideal point Pvc is designated as a first candidate point P1 and a position separated from the center ideal point Pvc by a threshold Lthf on the side of the center ideal point Pvc facing the candidate start point s1 is designated as a second candidate point P2, the front ideal point Pvf is set to one of the first, second candidate points P1, P2 and the candidate start point s1 as follows.

The front ideal point Pvf is set to the second candidate point P2, if the second candidate point P2 is between the first candidate point P1 and the candidate start point S1 than the candidate start point S1 (Fig. 23b)), is set to the candidate start point S1, if the second candidate start point P2 is on a side further away from the center ideal point Pvc than the candidate start point s1 (Fig. 23c)), and is set to the first candidate point P1, if the second candidate start point P2 is closer to the center ideal point Pvc than the first candidate point P1 (Fig. 23d).

That is, the front ideal point (front set point) Pvf is not set on a side further away from the center ideal point (center set point) Pvc than the candidate start point s1 and is not set between the center ideal point Pvc and the first candidate point P1.

Next, a rear ideal point setting processing unit of the minimum radius calculation processing unit performs rear ideal point setting processing to set a rear ideal point Pvb (also referred to as rear set point) as a third ideal point (also referred to as third set point). For this purpose, a distance setting processing unit of the rear ideal point setting processing unit performs distance setting processing to compare, when a distance from the center ideal point Pvc to the candidate end point e1 is Le, a distance Le/2 which is half the distance Le shown in FIG. 24 with a threshold Leth (for example, 35 [m]). When the distance Le/2 is equal to or longer than the threshold Leth, the distance setting processing unit then sets the distance Le/2 as a rear ideal point distance Lvb of the rear ideal point Pvb from the center ideal point Pvc. When the distance Le/2 is shorter than the threshold Leth, the distance setting processing unit then sets the threshold Leth as the rear ideal point distance Lvb.

Subsequently, the distance setting processing unit compares the rear ideal point distance Lvb with the distance Le. As shown in FIG. 25, when the rear ideal point distance Lvb is shorter than the distance Le, a rear ideal point determination processing unit of the rear ideal point setting processing unit performs rear ideal point determination processing to set the rear ideal point Pvb to a position separated from the center ideal point Pvc by the rear ideal point distance Lvb on a side farther of center ideal point Pvc facing the candidate end point e1. Further, as shown in FIG. 26, when the ideal point distance Lvb is equal to or longer than the distance Le, the rear ideal point determination processing unit sets the rear ideal point Pvb to a position (candidate end point e1) separated from the center ideal point Pvc by the distance Le on a side of the center ideal point Pvc facing the candidate end point e1 (Fig. 26a).

In determining the rear ideal point Pvb, a threshold Lthb from the center ideal point Pvc may be considered optionally in addition. In this case, when an intermediate point between the candidate end point e1 and the center ideal point Pvc is designated as a first candidate point P11 and a position separated from the center ideal point Pvc by a threshold Lthb on a side of the center ideal point Pvc facing the candidate end point e1 is designated as a second candidate point P 12, the rear ideal point Pvb is set to one of the first, second candidate points P11, P12 and the candidate end point e1 as follows.

The rear ideal point Pvb is set to the second candidate point P12, if the second candidate point P12 is between the first candidate point P11 and the candidate end point e1 (Fig. 26b)), is set to the candidate end point e1, if the second candidate point P12 is on a side further away from the center ideal point Pvc than the candidate end point e1 (Fig. 26c)), and is set to the first candidate point P11, if the second candidate point P12 is closer to the center ideal point Pvc than the first candidate point P11 (Fig. 26d).

That is, the rear ideal point (rear set point) Pvb is not set on a side further away from the center ideal point (center set point) Pvc than the candidate end point e1 and is not set between the center ideal point Pvc and the first candidate point P11.

Subsequently, an ideal radius calculation processing unit of the minimum radius calculation processing unit performs ideal radius calculation processing to calculate a radius as an ideal radius of curvature (also referred to as set radius of curvature) by the three-point calculation method based on coordinates of the center ideal point Pvc, the front ideal point Pvf and the rear ideal point Pvb and take it as the minimum radius.

Thus, in this embodiment, the center ideal point Pvc is set in the center vicinity AR1 of the corner cn1, the front ideal point Pvf is set to one of the first, second candidate points P1, P2 and the candidate start point sl, and the rear ideal point Pvb is set to one of the first, second candidate points P11, P 12 and the candidate end point e1. As shown in FIG. 27, the minimum radius is calculated by the three-point calculation method based on the center ideal point Pvc, the front ideal point Pvf and the rear ideal point Pvb, and thus the minimum radius can be a value approximating to a minimum radius on the actual road.

Specifically, a circle passing through the center ideal point Pvc, the front ideal point Pvf and the rear ideal point Pvb is designated as CLc, and a radius of curvature is calculated based on coordinates of the shape interpolation points m1 to m11. When a radius of curvature is calculated based on coordinates of the shape interpolation points m1 to m11 and a circle having this radius of curvature is drawn, it becomes CLd. Accordingly, the circles CLc and CLd have similar shapes.

Further, in this embodiment, the front ideal point Pvf is not set on the center ideal point Pvc side with respect to the first candidate point P1. Further, the rear ideal point Pvb is not set on the center ideal point Pvc side with respect to the first candidate point P11. Therefore, it is possible to prevent the minimum radius from becoming smaller as compared to the case where the minimum radius is calculated by the radius calculation processing unit.

Next, the flowchart will be explained.

In step S6-1, the center ideal point Pvc is set.

In step S6-2, the front ideal point Pvf is set.

In step S6-3, the rear ideal point Pvb is set.

In step S6-4, the ideal radius calculation processing is performed, and the process returns to the main routine.

Next, the clothoid coefficient estimation processing in step S7 of FIG. 2 will be explained.

FIG. 28 is a table showing a clothoid coefficient map in the embodiment of the present invention.

In this case, minimum radii Rmin and square values $A^2$ of the clothoid coefficient A of a clothoid curve are recorded corresponding to each other as a clothoid coefficient map in the ROM 33 (FIG. 1), and the clothoid coefficient estimation processing unit reads the minimum radius Rmin calculated in aforementioned step S6, refers to the clothoid coefficient map, and reads the value $A^2$ corresponding to the minimum radius Rmin. Subsequently, the clothoid coefficient estimation processing unit calculates a clothoid coefficient A. Note that the clothoid coefficient map is created based on a relationship between a radius on the actual road and the clothoid coefficient of a clothoid curve that is used when designing this road.

Next, the subroutine of the clothoid curve calculation processing in step S8 of FIG. 2 will be explained.

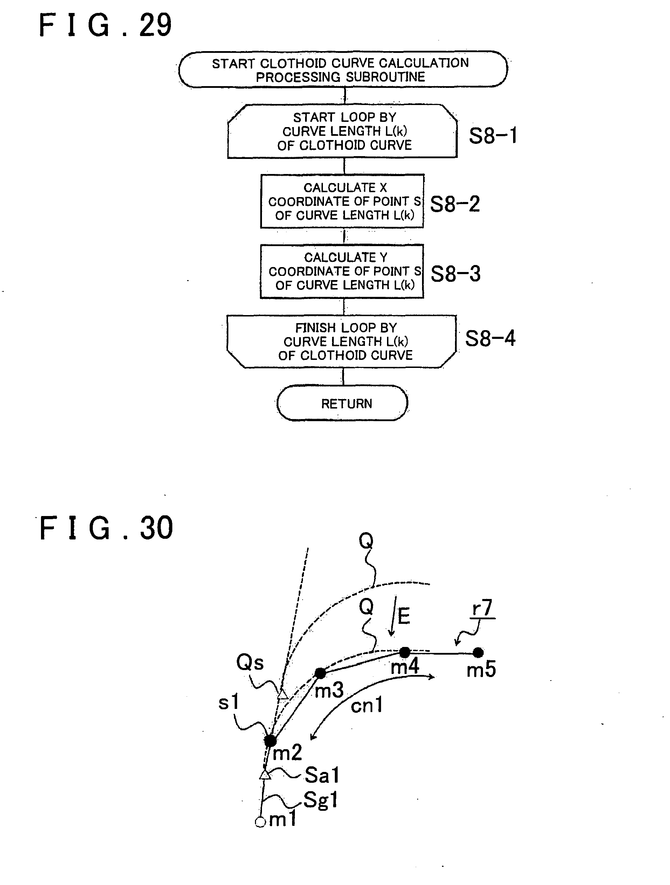

FIG. 29 is a flowchart showing the subroutine of the clothoid curve calculation processing in the embodiment of the present invention.

Now, the clothoid curve is a curve having a radius of curvature that becomes smaller with distance from its origin. Generally, when a road is designed, a part of the clothoid curve is assigned to the start point or end point of a corner. To express the clothoid curve by x-y coordinates, when the distance from the start point (origin) of the clothoid curve to a predetermined point S, namely, a curve length is L, and a curve radius at the point S is Rc, following equation holds true.

$$L \cdot Rc = A^2 \dots (7)$$

Further, normally, the X coordinate and Y coordinate of the clothoid curve can be calculated by polynomials shown by equations (8) and (9), respectively.

$$X = L \times (1 - L^2/(40Rc^2) + L^4/(3456Rc^4)$$
$$- L^6/(599040Rc^6) + L^8/(175472640Rc^8) \dots) \dots (8)$$

$$X = L^2/(6Rc) \times (1 - L^2/(56Rc^2) + L^4/(7040Rc^4) - L^6/(1612800Rc^6)$$
$$+ L^8/(588349440Rc^8) \dots) \dots (9)$$

In this case, it is conceivable to calculate the clothoid curve by aforementioned equations (8) and (9), but since equations (8) and (9) are high-order polynomials, load applied to the CPU 31 becomes large by clothoid curve calculation processing unit when it is attempted to calculate the clothoid curve by plotting a large number of points.

Accordingly, in this embodiment, the clothoid curve is calculated based on the clothoid coefficient A calculated in the clothoid coefficient estimation processing by the clothoid curve calculation processing unit. Thus, the clothoid curve calculation processing unit approximates and calculates the X coordinate and the Y coordinate of the clothoid curve (point S of the curve length L (k)) by equations (10) and (11) obtained based on simulation.
[Equation 1]

$$X = X_0 + \sum_r \cos \phi \qquad \cdots\cdots (1 0)$$

$$Y = Y_0 + \sum_L \sin \phi \qquad \cdots\cdots (1 1)$$

Here, $X_0$ and $Y_0$ are X coordinate and Y coordinate of a start point of the clothoid curve. Further, angle $\phi$ is expressed by following equation (12).
$$\phi = \alpha + 2k \cdot L \dots (12)$$

Here, $\alpha$ is the direction of the start point of the clothoid curve, and value k is expressed by equation (13).
$$k = 28/A^2 \dots (13)$$

Next, the flowchart will be explained.
In step S8-1, a loop is started by the curve length L(k) of the clothoid curve.
In step S8-2, the X coordinate of the point S of the curve length L(k) is calculated.
In step S8-3, the Y coordinate of the point S of the curve length L(k) is calculated.
In step S8-4, the loop is finished by the curve length L(k) of the clothoid curve, and the process returns to the main routine.
Next, the fitting processing in step S9 of FIG. 2 will be explained.
FIG. 30 is an explanatory diagram of the fitting processing in the embodiment of the present invention.
In the diagram, reference numeral r7 denotes a shape estimation road, reference numeral cn1 denotes a corner set by the corner connection processing and the first, second corner dividing processing, reference numerals m1 to m5 denote shape interpolation points forming the corner cn1, and reference numeral s1 denotes a candidate start point of the corner cn1.
In this case, a clothoid curve movement processing unit of the fitting processing unit performs clothoid curve movement processing to place the origin Qs of a clothoid curve Q on an extended line of the segment Sg1 connecting the shape interpolation points m1, m2, and move the clothoid curve Q in an arrow E direction so that a tangent line on the origin Qs and the extended line of the segment Sg1 correspond.
At this time, an error calculation processing unit of the fitting processing unit performs error calculation processing to calculate the sum of errors of the position of the clothoid curve Q with respect to the respective shape interpolation points m2 to m5 after the shape interpolation point m2. In this case, the errors of the position of the clothoid curve Q with respect to the respective shape interpolation points m2 to m5 are calculated based on a distance on the X-axis and a distance on the Y-axis between the shape interpolation points m2 to m5 and each point plotted when drawing the clothoid curve Q.
Then the clothoid curve movement processing unit matches the clothoid curve Q with the shape interpolation points m2 to m5 so that the sum of the errors becomes smallest, so as to set the position of the clothoid curve Q.
Subsequently, a start point/end point extraction processing unit of the fitting processing unit performs start point/end point extraction processing, and set the origin Qs of the clothoid curve Q as a start point Sa1 of the actual corner when the position of the clothoid curve Q is set.
Further, the clothoid curve movement processing unit, the error calculation processing unit and the start point/end point extraction processing unit perform similar processing on the end point side of the corner cn1 so as to set the position of the clothoid curve Q, and then set the origin of the clothoid curve Q as an end point of the actual corner.
In this manner, the candidate start point and the candidate end point are corrected with the clothoid curve Q, and the corrected candidate start point and candidate end point can be set as the start point Sa1 and the end point of the corner cn1, respectively. Thus, the start point Sa1 and the end point of the corner cn1 can be made close to the start point and the end point of a corner on the actual road.

Next, the start point/end point recording processing in step S10 of FIG. 2 will be explained.

The start point/end point recording processing unit records positions of extracted start point and end point as data representing the road shape in the data recording unit 16.

Thus, in this embodiment, a road shape can be estimated precisely, and the start point Sa1 and the end point of the corner cn1 are set based on the precisely estimated road shape. Therefore, it is possible to precisely control traveling of the vehicle by changing the shift speed of the automatic transmission 10 corresponding to the road shape or changing the output of the engine 52 corresponding to the road shape.

In this embodiment, estimation of a road shape is performed by operation of the CPU 31 of the navigation device 14, but it is possible to estimate a road shape by operation of a CPU (not shown) of the automatic transmission control device 11 or by operation of a CPU as a control device of the information center. Note that a vehicle control device is disposed as a control device at a higher level than the automatic transmission control device 11 and the engine control device 51 so as to perform overall control of the entire vehicle, and it is also possible to estimate a road shape by operation of a CPU of this vehicle control device.

Further, in this embodiment, estimation of road shape is performed for a shape estimation road between adjacent nodes, but when a road shape is estimated for every shape estimation road between respective nodes in the case where there is a node in a corner on the actual road, the processing becomes different before and after the node in the corner. Accordingly, in another embodiment, road following data are added between respective road links in road data, and when a road link that is expected to be entered after passing the node is clear, or when a searched route is set by route search processing, estimation of road shape can be performed for two or more consecutive shape estimation roads.

It should be noted that the present invention is not limited to the above-described embodiment, and can be modified in various ways based on the spirit of the present invention. Such modifications are not excluded from the scope of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A road shape estimating device, comprising:

   a data obtaining processing unit (31) that is adapted to obtain interpolation point data of a plurality of shape interpolation points (mi) which are set along a road (r1-r7) and represent a shape of the road (r1-r7);
   a radius calculation processing unit (31) that is adapted to calculate a radius (R) of curvature at each of the shape interpolation points (mi) based on the interpolation point data in a predetermined section of the road;
   a corner detection processing unit (31) that is adapted to detect a corner (cn1) in the predetermined section based on the radius (R) of curvature at each of the shape interpolation points (mi) and is adapted to set a candidate start point (s1) and a candidate end point (e1) of the detected corner (cn1); and
   a minimum radius calculation processing unit (31) that is adapted to set a center set point (Pvc) based on the candidate start point (s1) and the candidate end point (e1) of the corner (cn1), a front set point (Pvf) on a side of the candidate start point (s1) with respect to the center set point (Pvc), and a rear set point (Pvb) on a side of the candidate end point (e1) with respect to the center set point (Pvc), and is adapted to calculate a set radius of curvature of the corner (cn1) as a minimum radius based on the center set point (Pvc), the front set point (Pvf) and the rear set point (Pvb).

2. The road shape estimating device according to claim 1, wherein the minimum radius calculation processing unit (31) is adapted to set a corner intermediate point (Pc) to a center position between the candidate start point (s1) and the candidate end point (e1), a corner front point (Pf) between the candidate start point (s1) and the corner intermediate point (Pc), and a corner rear point (Pb) between the candidate end point (e1) and the corner intermediate point (Pc), and is adapted to set the center set point (Pvc) in a range from the corner front point (Pf) to the corner rear point (Pb).

3. The road shape estimating device according to claim 1 or 2, wherein the minimum radius calculation processing unit (31) is adapted to set, when an intermediate point between the candidate start point (s1) and the center set point (Pvc) is designated as a first candidate point (P1) and a point separated from the center set point (Pvc) by a threshold (Lthf) on a side nearer than the center set point (Pvc) is designated as a second candidate point (P2), the front set point (Pvf) to one of the first and second candidate points (P1, P2) and the candidate start point (s1).

4. The road shape estimating device according to one of claims 1 to 3, wherein the minimum radius calculation processing unit (31) is adapted to set, when an intermediate point between the candidate end point (e1) and the center set point (Pvc) is designated as a first candidate point (P11) and a point separated from the center set point (Pvc) by a threshold (Lhtb) on a side farther than the center set point (Pvc) is designated as a second candidate point (P12), the rear set point (Pvb) to one of the first and second candidate points (P11, P12) and the candidate end point (e1).

5. A road shape estimating method, comprising the steps of:

obtaining interpolation point data of plural shape interpolation points (mi) which are set along a road (r1-r7) and represent a shape of the road (r1-r7);
calculating a radius (R) of curvature at each of shape interpolation points (mi) based on the interpolation point data in a predetermined section of the road (r1-r7);
detecting a corner (cn1) in the predetermined section based on the radius (R) of curvature at each of the shape interpolation points (mi) and setting a candidate start point (s1) and a candidate end point (e1) of the detected corner (cn1);
setting a center set point (Pvc) based on the candidate start point (s1) and the candidate end point (e1) of the corner (cn1), a front set point (Pvf) on the candidate start point side with respect to the center set point (Pvc), and a rear set point (Pvb) on the candidate end point side with respect to the center set point (Pvc); and
calculating an set radius of curvature of the corner (cn1) as a minimum radius based on the center set point (Pvc), the front set point (Pvf) and the rear set point (Pvb).

6. The road shape estimating method according to claim 5, further comprising the step of:

setting a corner intermediate point (Pc) to a center position between the candidate start point (s1) and the candidate end point (e1), a corner front point (Pf) between the candidate start point (s1) and the corner intermediate point (Pc), and a corner rear point (Pb) between the candidate end point (e1) and the corner intermediate point (Pc); and
setting the center set point (Pvc) in a range from the corner front point (Pf) to the corner rear point (Pb).

7. The road shape estimating method according to claim 5 or 6, further comprising the step of:

setting, when an intermediate point between the candidate start point (s1) and the center set point (Pvc) is designated as a first candidate point (P1) and a point separated from the center set point (Pvc) by a threshold (Lthf) on a side nearer than the center set point (Pvc) is designated as a second candidate point (P2), the front set point (Pvf) to one of the first and second candidate points (P1, P2) and the candidate start point (s1).

8. The road shape estimating method according to one of claims 5 to 7, further comprising the step of:

setting, when an intermediate point between the candidate end point (e1) and the center set point (Pvc) is designated as a first candidate point (P 11) and a point separated from the center set point (Pvc) by a threshold (Lthb) on a side farther than the center set point (Pvc) is designated as a second candidate point (P12), the rear set point (Pvb) to one of the first and second candidate points (P11, P12) and the candidate end point (e1).

9. A program comprising program code which, when run on a computer causes the computer to perform the steps of a method of one of claims 5 to 8.

# FIG.1

EP 2 105 709 A2

# FIG.2

START

| | |
|---|---|
| RADIUS CALCULATION PROCESSING | S1 |
| CORNER DETECTION PROCESSING | S2 |
| CORNER CONNECTION PROCESSING | S3 |
| FIRST CORNER DIVIDING PROCESSING | S4 |
| SECOND CORNER DIVIDING PROCESSING | S5 |
| MINIMUM RADIUS CALCULATION PROCESSING | S6 |
| CLOTHOID COEFFICIENT ESTIMATION PROCESSING | S7 |
| CLOTHOID CURVE CALCULATION PROCESSING | S8 |
| FITTING PROCESSING | S9 |
| START POINT/END POINT RECORDING PROCESSING | S10 |

END

# FIG.3

START RADIUS CALCULATION PROCESSING SUBROUTINE

| | |
|---|---|
| CALCULATE SEGMENT LENGTH OF FRONT SIDE SEGMENT | S1-1 |
| CALCULATE SEGMENT LENGTH OF REAR SIDE SEGMENT | S1-2 |
| CALCULATE DIRECTION ANGLE | S1-3 |
| CALCULATE RADIUS | S1-4 |

RETURN

# F I G . 4

# F I G . 5

# F I G . 6

# FIG.7

# FIG.8

# FIG.9

# FIG.10

F I G . 11

F I G . 12

F I G . 13

FIG.14

FIG.15

START MINIMUM RADIUS
CALCULATION PROCESSING
SUBROUTINE

SET CENTER IDEAL POINT   S6-1

SET FRONT IDEAL POINT   S6-2

SET REAR IDEAL POINT   S6-3

IDEAL RADIUS CALCULATION
PROCESSING   S6-4

RETURN

FIG.16

# F I G . 17

# F I G . 18

# F I G . 19

## FIG.20

## FIG.21

## FIG.22

# F I G . 23  a)

# F I G . 23  b)

# F I G . 23  c)

FIG. 23　d)

FIG. 24

FIG. 25

FIG. 26 a)

FIG. 26 b)

FIG. 26 c)

FIG. 26 d)

FIG. 27

FIG. 28

| Rmin | $A^2$ |
|------|-------|
| 10 | 498 |
| 20 | 732 |
| ⋮ | ⋮ |
| 340 | 11060 |
| 350 | 11088 |

# FIG.29

```
START CLOTHOID CURVE CALCULATION
PROCESSING SUBROUTINE

START LOOP BY
CURVE LENGTH L(k)          S8-1
OF CLOTHOID CURVE

CALCULATE X
COORDINATE OF POINT S      S8-2
OF CURVE LENGTH L(k)

CALCULATE Y
COORDINATE OF POINT S      S8-3
OF CURVE LENGTH L(k)

FINISH LOOP BY
CURVE LENGTH L(k)          S8-4
OF CLOTHOID CURVE

RETURN
```

# FIG.30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214839 A